# EUROPÄISCHE PATENTANMELDUNG

(11) **EP 1 136 773 A2**
(43) Veröffentlichungstag der Anmeldung: **26.09.2001**
(21) Anmeldenummer: 01101558.3
(22) Anmeldetag: 25.01.2001
(51) Int. Cl.: F25B 49/04, F25B 15/10

(54) **Verfahren zur Regelung einer Diffusionsabsorptionsanlage**

(30) Priorität: 22.03.2000 DE 10014123
(71) Anmelder: Buderus Heiztechnik GmbH, D-35576 Wetzlar (DE)
(72) Erfinder: Schulte, Uwe, 35037 Marburg (DE); Korinth, Christoph, 57555 Mudersbach (DE); Vloon, Paulus Jacobus, 7422 RM Deventer (NL); Wierenga, Hendrik Jacob Lammert, 8196 KC Welsum (NL)

(57) **Zusammenfassung**

Die Erfindung betrifft ein Verfahren zur Regelung einer Diffusionsabsorptionsanlage, insbesondere zur Anwendung als gasbetriebene Wärmepumpe mit Anschluss an einen Heiz- oder Kühlkreislauf, mit einem Kälte- bzw. Lösungsmittelkreislauf, einem Kocher mit vertikalen Kocherrohren (3) und einem Gasbrenner (4), einem Absorber, einem Rektifikator, einem Verdampfer, einem Gas-/Gas-Wärmetauscher, einem Kondensator sowie einem Reservoir für das Kälte- bzw. Lösungsmittel, vorzugsweise das Stoffsystem Ammoniak-Wasser.

Mit der Erfindung soll der Betrieb einer Diffusionsabsorptionsanlage optimiert und dabei insbesondere auf den Einsatz als gasbetriebene Wärmepumpe abgestimmt werden.

Gekennzeichnet ist das Verfahren dadurch, dass die Leistung der Wärmepumpe in Abhängigkeit von der Temperatur des Kochers geregelt wird.

## Beschreibung

Die Erfindung betrifft ein Verfahren zur Regelung einer Diffusionsabsorptionsanlage nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-/Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃-reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-Ammoniak-Atmosphäre verdampft das Ammoniak unter Aufnahme von Umgebungsenergie. Danach gelangt das Gasgemisch durch einen Gas-/Gas-Wärmetauscher und strömt zum Absorber, wo das gasförmige Ammoniak von der NH₃-armen Ammoniak-/ Wasser-Lösung absorbiert wird und die Absorptionswärme an das Heizungswasser abgibt, bevor der geräuschfreie Prozess wieder neu beginnt.

Die EP 0 419 606 B1 enthält einen Austreiber bzw. Kocher mit einer Gasblasenpumpe für eine Diffusionsabsorptionsanlage. Dieser besitzt sechs kreisförmig angeordnete Pumpen-bzw. Kocherrohre und im unteren Bereich ebenfalls sechs Flammenrohre auf einem Teilkreis zur Beheizung mit je einem Gasbrenner. In der alternierenden Anordnung berührt jedes Flammenrohr je zwei Pumpenrohre und ist mit diesen verschweißt. Im normalen Betrieb wird den einzelnen Pumpenrohren ungefähr die gleiche Wärmemenge zugeführt. Für den Betrieb mit reduzierter Leistung ist vorgesehen, dass nur jedes zweite Flammrohr beheizt wird. Daher ist maximal ein zweistufiger Betrieb möglich, welcher durch das Zu- bzw. Abschalten der Einzelbrenner ausgeführt wird.

Weiterhin ist von Diffusionsabsorptionsanlagen bekannt, einen Betriebspunkt mit einer Sicherheits- bzw. Endabschaltung entsprechend einzugrenzen. Damit wird lediglich die Einhaltung eines festen Betriebszustandes gewährleistet.

Der Erfindung liegt die Aufgabe zugrunde, den Betrieb einer Diffusionsabsorptionsanlage zu optimieren und dabei insbesondere auf den Einsatz als gasbetriebene Wärmepumpe abzustimmen.

Erfindungsgemäß wird dies mit den Merkmalen des Patentanspruches 1 gelöst. Vorteilhafte Weiterbildungen sind den Unteransprüchen zu entnehmen.

Für den Einsatz als gasbetriebene Wärmepumpe ist die Diffusionsabsorptionsanlage mit einem Anschluss an einen Heizkreislauf versehen. Gekennzeichnet ist die Erfindung dadurch, dass die Leistung der Wärmepumpe in Abhängigkeit von der Temperatur des Kochers geregelt wird. Erfasst wird die Temperatur des Kochers vorzugsweise an einem Messpunkt im oberen Bereich der Kocherrohre. Hier befindet sich Ammoniakdampf und arme Lösung in den Kocherrohren. Die Temperatur von Rohrwand oder Dampfstrom gibt Hinweise auf die produzierte Dampfmenge bzw. Dampfkonzentration, wovon der gesamte Kreisprozess abhängt. Sobald das Temperaturniveau im Heizkreislauf und/oder die Belastung des Gasbrenners ansteigt, nimmt auch die Temperatur des Kochers zu.

Die Wärmepumpe wird vorzugsweise in Abhängigkeit von den Temperaturen im Heizkreislauf modulierend betrieben. Dabei steigt die Temperatur des Kochers mit der Erhöhung der Temperatur-Sollwerte im Heizkreislauf an. Zur Ermittlung des Sollwertes für die Temperatur des Kochers ist deshalb eine Auswertung der Vorlauftemperatur im Heizkreislauf vorteilhaft. Es wird dann der Sollwert für die Temperatur des Kochers so eingestellt, daß die Wärmepumpe zur jeweils vorherrschenden Vorlauftemperatur die maximale Leistung erzeugt.

Mit dem erfindungsgemäßen Verfahren wird die Wärmepumpe immer im optimalen Betriebspunkt mit möglichst hoher Leistung und hohem COP-Wert betrieben. Zur aktuell vorherrschenden Vorlauftemperatur wird automatisch die maximal mögliche Leistung ausgeschöpft. Zusätzlich zur bekannten sicherheitstechnischen Überwachung der Anlage, wird dabei immer eine optimale Kochertemperatur gefahren. Dadurch ist ein Modulieren der Wärmepumpe möglich und es können unterschiedliche Temperaturen für die speziellen Anforderungen der Wärmeverbraucher bereit gestellt werden. Zum Beispiel wird an einen angeschlossenen Heizkreis die Wärme auf einem niedrigeren Temperaturniveau abgegeben als es für eine kurzzeitige Warmwasserbereitung, in einem Kreislauf durch einen Warmwasserspeicher, erforderlich ist. Somit nutzt die Wärmepumpe die niedrigen Temperaturen im Heizkreislauf mit einer hohen Leistung über einen langen Zeitraum aus und kann auf Wärmeanforderungen bzw. wechselnde Vorlauftemperaturen reagieren.

Durch die variable, gleitende Anpassung des Betriebszustandes an die Anlagenbedingungen bzw. -parameter ergeben sich lange Laufzeiten und die Wärmepumpe erreicht sehr gute Nutzungsgrade. Besonders in Kombination mit einer weiteren Wärmequelle für Wärmebedarfsspitzen, eignet sich die Wärmepumpe zum Abdecken der Grundlast in einer Wärmeversorgungsanlage.

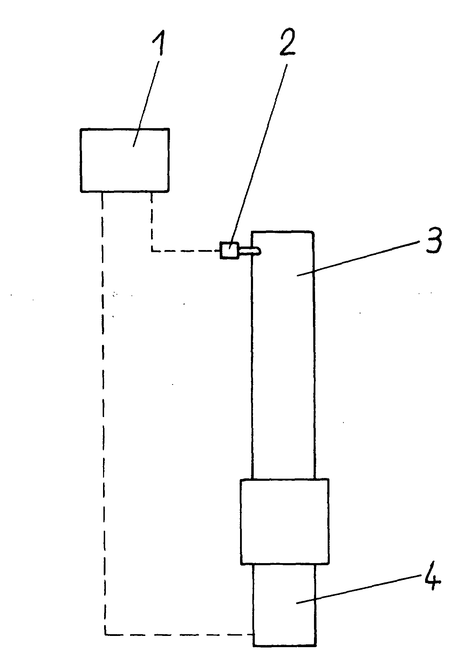

Die Zeichnung stellt ein Ausführungsbeispiel der Erfindung dar und zeigt in einer einzigen Figur ein Schema zur Regelung einer Diffusionsabsorptionsanlage.

Die Regeleinrichtung 1 erfasst an einer Meßstelle 2 die Temperatur des Kochers im oberen Bereich der Kocherrohre 3 und regelt danach die Leistung des Gasbrenners 4. Nicht dargestellt ist eine Messstelle für die Vorlauftemperatur im Heizkreislauf.

## Patentansprüche

1. Verfahren zur Regelung einer Diffusionsabsorptionsanlage, insbesondere zur Anwendung als gasbetriebene Wärmepumpe mit Anschluss an einen Heiz- oder Kühlkreislauf, mit einem Kälte- bzw. Lösungsmittelkreislauf, einem Kocher mit vertikalen Kocherrohren und einem Gasbrenner, einem Absorber, einem Rektifikator, einem Verdampfer, einem Gas-/Gas-Wärmetauscher, einem Kondensator sowie einem Reservoir für das Kälte- bzw. Lösungsmittel, vorzugsweise für das Stoffsystem Ammoniak-Wasser,
**dadurch gekennzeichnet, dass** die Leistung der Wärmepumpe in Abhängigkeit von der Temperatur des Kochers geregelt wird.

2. Verfahren nach Anspruch 1,
**dadurch gekennzeichnet, dass** die Temperatur des Kochers vorzugsweise an einer Messstelle (2) im oberen Bereich der Kocherrohre (3) erfasst wird.

3. Verfahren nach den Ansprüchen 1 und 2,
**dadurch gekennzeichnet, dass** die Wärmepumpe vorzugsweise in Abhängigkeit von den Temperaturen im Heizkreislauf modulierend betrieben wird, wobei die Temperatur des Kochers mit der Erhöhung der Temperatur-Sollwerte im Heizkreislauf ansteigt.

4. Verfahren nach den Ansprüchen 1 bis 3,
**dadurch gekennzeichnet, dass** vorzugsweise die Vorlauftemperatur im Heizkreislauf zur Ermittlung des Sollwertes für die Temperatur des Kochers verwendet wird.

5. Verfahren nach den Ansprüchen 1 bis 4,
**dadurch gekennzeichnet, dass** der Sollwert für die Temperatur des Kochers vorzugsweise so eingestellt wird, dass die Wärmepumpe zur jeweils vorherrschenden Vorlauftemperatur die maximale Leistung erzeugt.
